# EUROPÄISCHE PATENTSCHRIFT

(11) **EP 3 682 129 B1**
(45) Veröffentlichungstag und Bekanntmachung des Hinweises auf die Patenterteilung: **16.06.2021**
(21) Anmeldenummer: 18773931.3
(22) Anmeldetag: 12.09.2018
(51) Int. Cl.: F16D 3/12, F16D 7/02, F16F 15/129, F16F 15/139

(54) **DREHMOMENTBEGRENZER FÜR EINEN ANTRIEBSSTRANG**
TORQUE LIMITER FOR A POWERTRAIN
LIMITEUR DE COUPLE POUR UN GROUPE MOTOPROPULSEUR

(30) Priorität: 15.09.2017 DE 102017121437
(43) Veröffentlichungstag der Anmeldung: 22.07.2020
(73) Patentinhaber: Schaeffler Technologies AG & Co. KG, 91074 Herzogenaurach (DE)
(72) Erfinder: MINGAS, Constantin, 77815 Bühl (DE)
(86) Internationale Anmeldenummer: PCT/DE2018/100769
(87) Internationale Veröffentlichungsnummer: WO 2019/052603

(56) Entgegenhaltungen:
- EP-A2- 1 936 218
- EP-A2- 2 233 779
- DE-T5-112013 007 052
- US-A- 6 119 839

## Beschreibung

Die Erfindung betrifft einen Drehmomentbegrenzer gemäß Patentanspruch 1 für einen Antriebsstrang, insbesondere für einen Antriebsstrang eines Kraftfahrzeugs. Der Antriebsstrang ist insbesondere ein Antriebsstrang für ein Hybridfahrzeug. Der Antriebsstrang weist insbesondere eine erste Antriebseinheit (z. B. eine Verbrennungskraftmaschine) und eine zweite Antriebseinheit (z. B. eine elektrische Maschine) auf, die über den Drehmomentbegrenzer drehmomentübertragend verbindbar bzw. voneinander trennbar sind.

Der Drehmomentbegrenzer weist zumindest eine sich entlang einer axialen Richtung erstreckende Drehachse sowie eine Antriebsseite und eine Abtriebsseite auf, die über mindestens einen Reibbelag und unter einer in der axialen Richtung wirkenden Vorspannung zumindest bis zum Erreichen eines in einer Umfangsrichtung wirkenden Grenzdrehmoments miteinander drehmomentübertragend verbunden sind. Der mindestens eine Reibbelag ist (im Betrieb des Antriebsstrangs) bei Überschreiten des Grenzdrehmoments an einer, nur an einer von Antriebsseite und Abtriebsseite vorliegenden, ersten Reibfläche rutschend angeordnet und dabei mit einer, an der anderen von Antriebsseite und Abtriebsseite vorliegenden zweiten Reibfläche kraftschlüssig verbunden.

Derartige Drehmomentbegrenzer sind bekannt. Dabei wird, bei Überschreiten eines Grenzdrehmoments, an nur einer von zwei Reibflächen ein Rutschen der Reibbeläge ermöglicht. Auf der anderen Reibfläche wird ein Rutschen verhindert. Diese gezielte Fixierung einer der zwei Reibflächen an der Antriebsseite oder der Abtriebsseite ist erforderlich, um eine geringe Variation des Soll-Rutschmoments (bei Überschreiten des Grenzdrehmoments) sicherzustellen. Dafür wird auf der für das Rutschen vorgesehenen Reibfläche eine spezielle Materialpaarung vorgesehen.

Die Fixierung der Reibbeläge an einer von Antriebsseite und Abtriebsseite wird bei bekannten Drehmomentbegrenzern über in Umfangsrichtung formschlüssige Verbindungen zwischen Reibfläche und Reibbelag sichergestellt (z. B. durch Vernietung oder ineinander erstreckende Profilierungen). Alternativ wird der Reibbelag über eine Verklebung stoffschlüssig mit der Reibfläche verbunden.

Diese formschlüssige oder stoffschlüssige Fixierung des Reibbelags an einer der Reibflächen erfordert jedoch einen erhöhten Montage- bzw. Herstellungsaufwand und verursacht höhere Kosten.

Aus der US 6 119 839 A ist ein Drehmomentbegrenzer bekannt, der auf den Oberbegriff des Patentanspruchs 1 lesbar ist.

Der vorliegenden Erfindung liegt die Aufgabe zugrunde, die in dem Stand der Technik entdeckten Nachteile zumindest teilweise zu überwinden und insbesondere einen Drehmomentbegrenzer bereitzustellen, bei dem die vorbestimmte einseitige Fixierung der Reibbelage anders realisiert wird.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung betrifft einen Drehmomentbegrenzer für einen Antriebsstrang, zumindest aufweisend eine sich entlang einer axialen Richtung erstreckende Drehachse sowie eine Antriebsseite und eine Abtriebsseite. Die Antriebsseite und die Abtriebsseite sind (im Betrieb des Drehmomentbegrenzers) über mindestens einen Reibbelag und unter einer in der axialen Richtung wirkenden Vorspannung zumindest bis zum Erreichen eines in einer Umfangsrichtung wirkenden Grenzdrehmoments miteinander drehmomentübertragend verbunden. Der mindestens eine Reibbelag ist bei Überschreiten des Grenzdrehmoments an einer, nur an einer von Antriebsseite und Abtriebsseite vorliegenden, ersten Reibfläche rutschend angeordnet. Dabei ist der mindestens eine Reibbelag mit einer, an der anderen von Antriebsseite und Abtriebsseite vorliegenden zweiten Reibfläche (weiterhin) kraftschlüssig verbunden. Eine erste Kontaktfläche zwischen dem mindestens einen Reibbelag und der ersten Reibfläche weist einen mittleren ersten Reibradius und eine zweite Kontaktfläche zwischen dem mindestens einen Reibbelag und der zweiten Reibfläche einen von dem mittleren ersten Reibradius unterschiedlichen mittleren zweiten Reibradius auf.

Üblicherweise liegt der mittlere Reibradius in der Mitte einer Kontaktfläche zwischen dem Reibbelag und der Reibfläche vor, wobei die Mitte entlang einer radialen Richtung jeweils gleich weit von einem äußeren Radius der Kontaktfläche und einem inneren Radius der Kontaktfläche beabstandet angeordnet ist.

Die Ausgestaltung der Kontaktflächen mit unterschiedlichen mittleren Reibradien ermöglicht ein vorbestimmtes Durchrutschen (also eine Verdrehung des Reibbelags gegenüber der Reibfläche in Umfangsrichtung) an einer (vorbestimmten) Reibfläche (nämlich immer an der ersten Reibfläche), während die andere (zweite) Reibfläche weiter kraftschlüssig mit dem Reibbelag verbunden ist (und also nicht durchrutscht).

Insbesondere besteht die erste Reibfläche aus einem Edelstahl.

Insbesondere ist der mittlere erste Reibradius kleiner ist als der mittlere zweite Reibradius. Bevorzugt ist der mittlere erste Reibradius um mindestens 1 %, insbesondere um mindestens 2 %, bevorzugt um mindestens 5 %, kleiner als der mittlere zweite Reibradius.

Der Unterschied der mittleren Reibradien kann durch mindestens eine Aussparung realisiert sein. Die mindestens eine Aussparung ist an dem mindestens einem Reibbelag hin zu der Reibfläche und/oder an mindestens einer Reibfläche realisiert, wobei durch die Aussparung die Kontaktfläche reduziert ist.

Die mindestens eine Aussparung ist bevorzugt nur an dem mindestens einen Reibbelag hin zu der zweiten Reibfläche und/oder an der zweiten Reibfläche vorgesehen. Damit kann die erste Kontaktfläche, die zum Durchrutschen vorgesehen ist, weiterhin so groß wie möglich ausgeführt sein, so dass ein Abrieb und damit ein Verschleiß immer an der größeren der beiden Kontaktflächen erfolgt (hier an der ersten Kontaktfläche und nicht an der durch die Aussparung verringerten zweiten Kontaktfläche).

Die mindestens eine Aussparung ist insbesondere in einer radialen Richtung innen von dem mittleren ersten Reibradius angeordnet.

Die mindestens eine Aussparung ist bevorzugt in der Umfangsrichtung umlaufend ausgeführt.

Insbesondere erstreckt sich die durch die Aussparung reduzierte Kontaktfläche mit einem an die Aussparung angrenzenden Rand entlang der Umfangsrichtung auf einem konstanten ersten Radius.

Die Kontaktflächen erstrecken sich entlang der radialen Richtung insbesondere zwischen einem äußeren Radius und einem inneren Radius. Ein mittlerer Reibradius kann durch eine Aussparung verringert werden, indem die Aussparung in der radialen Richtung außen von der Kontaktfläche angeordnet ist und der äußere Radius (gegenüber dem äußeren Radius an der anderen Kontaktfläche des Reibbelags) verkleinert wird. Ein mittlerer Reibradius kann durch eine Aussparung vergrößert werden, indem die Aussparung in der radialen Richtung innen von der Kontaktfläche angeordnet ist und der innere Radius (gegenüber dem inneren Radius an der anderen Kontaktfläche des Reibbelags) vergrößert wird.

Die Aussparung ist insbesondere so angeordnet, dass die zweite Kontaktfläche verringert wird und damit der mittlere zweite Reibradius gegenüber dem mittleren ersten Reibradius vergrößert wird.

Erfindungsgemäß ist zumindest ein mittlerer Reibradius durch mindestens eine, innerhalb einer Kontaktfläche an einer Reibfläche angeordnete und sich zumindest in der axialen Richtung hin zum Reibbelag erstreckende Erhöhung erhöht oder verringert. Diese Erhöhung ist insbesondere entlang der Umfangsrichtung umlaufend (und entlang eines konstanten zweiten Radius verlaufend) ausgeführt. Durch die Erhöhung kann eine Anpressung zwischen Reibbelag und Reibfläche verstärkt werden, wodurch der mittlere Reibradius verändert werden kann.

Die Erhöhung kann durch eine Sicke an dem die Reibfläche bildendem Bauteil realisiert sein.

Der mindestens eine Reibbelag bildet bis zum Erreichen des Grenzdrehmoments mit der Antriebsseite und mit der Abtriebsseite zumindest gegenüber der Umfangsrichtung eine ausschließlich kraftschlüssige Verbindung aus. Es sind hier also gerade keine in Umfangsrichtung wirkende stoffschlüssige (z. B. durch Kleben) oder formschlüssige (z. B. durch ineinandergreifende Profilierungen oder Nieten) Verbindungen vorgesehen. Die vorgeschlagene Erhöhung bildet insbesondere keine in der Umfangsrichtung wirkende formschlüssige Verbindung aus.

Insbesondere werden die Reibbeläge also zwischen der Antriebsseite und der Abtriebsseite bzw. zwischen den Reibflächen angeordnet und durch die Vorspannung einer Vorspannfeder gegenüber der Drehachse fixiert. Damit kann eine einfache Montage realisiert werden.

Der Drehmomentbegrenzer kann zumindest einen ersten Reibbelag und einen zweiten Reibbelag aufweisen, zwischen denen die Antriebsseite oder die Abtriebsseite angeordnet ist.

Der Drehmomentbegrenzer wird insbesondere zusammen mit einem bekannten Torsionsdämpfer ausgeführt. Der Torsionsdämpfer dient der Dämpfung von Drehmomentschwankungen. Insbesondere ist der Torsionsdämpfer in einer radialen Richtung innerhalb des mindestens einen Reibbelags angeordnet.

Der mindestens eine Reibbelag, die Drehachse sowie die Antriebsseite und die Abtriebsseite sind insbesondere koaxial zueinander angeordnet.

Es wird weiter ein Antriebsstrang für ein Kraftfahrzeug vorgeschlagen, zumindest aufweisend eine erste Antriebseinheit (z. B. eine Verbrennungskraftmaschine) zur Bereitstellung eines ersten Antriebsdrehmoments und eine zweite Antriebseinheit (z. B. eine elektrische Maschine) zur Bereitstellung eines zweiten Antriebsdrehmoments, wobei die erste Antriebseinheit und die zweite Antriebseinheit über einen vorstehend beschriebenen Drehmomentbegrenzer drehmomentübertragend verbindbar bzw., bei Erreichen eines Grenzdrehmoments, voneinander trennbar sind.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine erste Ausführungsvariante eines bekannten Drehmomentbegrenzers in einem Antriebsstrang in einer Seitenansicht im Schnitt;
- Fig. 2:: eine zweite Ausführungsvariante eines bekannten Drehmomentbegrenzers in einer Seitenansicht im Schnitt;
- Fig. 3:: ein Detail der Fig. 1;
- Fig. 4:: ein Drehmomentbegrenzer mit unterschiedlichen mittleren Reibradien in einer Seitenansicht im Schnitt; und
- Fig. 5:: ein Detail der Fig. 4.

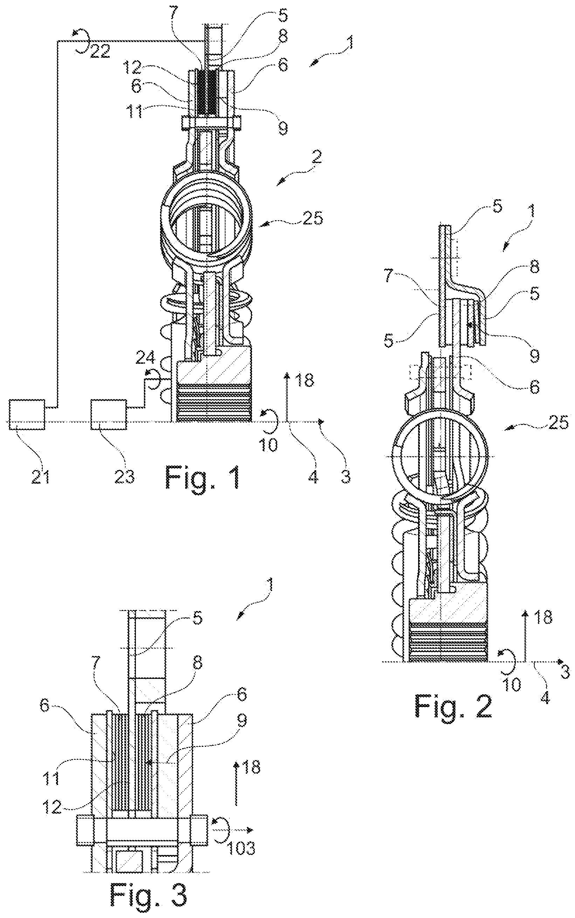

Fig. 1 zeigt eine erste Ausführungsvariante eines bekannten Drehmomentbegrenzers 1 in einem Antriebsstrang 2 in einer Seitenansicht im Schnitt. Der Antriebsstrang 2 weist eine erste Antriebseinheit 21 (z. B. eine Verbrennungskraftmaschine) zur Bereitstellung eines ersten Antriebsdrehmoments 22 und eine zweite Antriebseinheit 23 (z. B. eine elektrische Maschine) zur Bereitstellung eines zweiten Antriebsdrehmoments 24 auf. Das erste Antriebsdrehmoment 22 wirkt unmittelbar auf die Antriebsseite 5 des Drehmomentbegrenzers 1. Das zweite Antriebsdrehmoment 24 wirkt unmittelbar auf die Abtriebsseite 6 des Drehmomentbegrenzers. Die Abtriebsseite 6 kann weiter mit einem Getriebe (hier nicht dargestellt) drehmomentübertragend verbunden sein. Ein Torsionsdämpfer 25 ist an der Abtriebsseite 6 und in einer radialen Richtung 18 innerhalb der Reibbeläge 7, 8 angeordnet. Die erste Antriebseinheit 21 und die zweite Antriebseinheit 23 sind über den Drehmomentbegrenzer 1 drehmomentübertragend verbindbar bzw., bei Erreichen eines Grenzdrehmoments, voneinander trennbar.

Der Drehmomentbegrenzer 1 weist eine sich entlang einer axialen Richtung 3 erstreckende Drehachse 4 sowie eine Antriebsseite 5 und eine Abtriebsseite 6 auf, die über zwei Reibbeläge 7, 8 und unter einer in der axialen Richtung 3 wirkenden Vorspannung 9 zumindest bis zum Erreichen eines in einer Umfangsrichtung 10 wirkenden Grenzdrehmoments miteinander drehmomentübertragend verbunden sind. Zwischen dem ersten Reibbelag 7 und dem zweiten Reibbelag 8 ist die Antriebsseite 5 angeordnet. Die Abtriebsseite 6 umfasst hier zwei Bleche, zwischen denen die Reibbeläge 7, 8 und die Antriebsseite 5 angeordnet sind. Zwischen einem Blech der Abtriebsseite 6 und einem Reibbelag 7, 8 (hier dem zweiten Reibbelag 8) ist eine Vorspannfeder angeordnet, die die zur kraftschlüssigen Verbindung erforderliche Vorspannung 9 erzeugt.

Die Reibbeläge 7, 8 sind im Betrieb des Antriebsstrangs 2 bei Überschreiten des Grenzdrehmoments an einer, nur an einer von Antriebsseite 5 und Abtriebsseite 6 vorliegenden, ersten Reibfläche 11 (hier an der Abtriebsseite 6) rutschend angeordnet und dabei mit einer, an der anderen von Antriebsseite 5 und Abtriebsseite 6 vorliegenden zweiten Reibfläche 12 (hier an der Antriebsseite 5) kraftschlüssig verbunden.

Die Reibbeläge 7, 8, die Drehachse 3 sowie die Antriebsseite 5 und die Abtriebsseite 6 sind koaxial zueinander angeordnet.

Fig. 2 zeigt eine zweite Ausführungsvariante eines bekannten Drehmomentbegrenzers 1 in einer Seitenansicht im Schnitt. Auf die Ausführungen zu Fig. 1 wird verwiesen. Im Unterschied zur ersten Ausführungsvariante ist bei der zweiten Ausführungsvariante zwischen dem ersten Reibbelag 7 und dem zweiten Reibbelag 8 die Abtriebsseite 6 angeordnet. Die Antriebsseite 5 umfasst hier zwei Bleche, zwischen denen die Reibbeläge 7, 8 und die Abtriebsseite 6 angeordnet sind. Zwischen einem Blech der Antriebsseite 5 und einem Reibbelag 7, 8 (hier dem zweiten Reibbelag 8) ist eine Vorspannfeder angeordnet, die die zur kraftschlüssigen Verbindung erforderliche Vorspannung 9 erzeugt.

Fig. 3 zeigt ein Detail der Fig. 1. Auf die Ausführungen zu Fig. 1 wird verwiesen. Die Reibbeläge 7, 8 sind bei Überschreiten des Grenzdrehmoments an der ersten Reibfläche 11 (diese ist hier an der Abtriebsseite 6 angeordnet) rutschend angeordnet. Dabei sind die Reibbeläge 7, 8 mit der zweiten Reibfläche 12 (hier an der Antriebsseite 5 angeordnet) weiterhin kraftschlüssig verbunden. Das wird bei den in den Fig. 1 bis 3 gezeigten Ausführungsvarianten durch eine stoffschlüssige (z. B. durch Kleben) oder formschlüssige (z. B. ineinander erstreckende Profiliierungen oder Niete) Verbindung zwischen der zweiten Reibfläche 12 und dem jeweiligen Reibbelag 7, 8 realisiert.

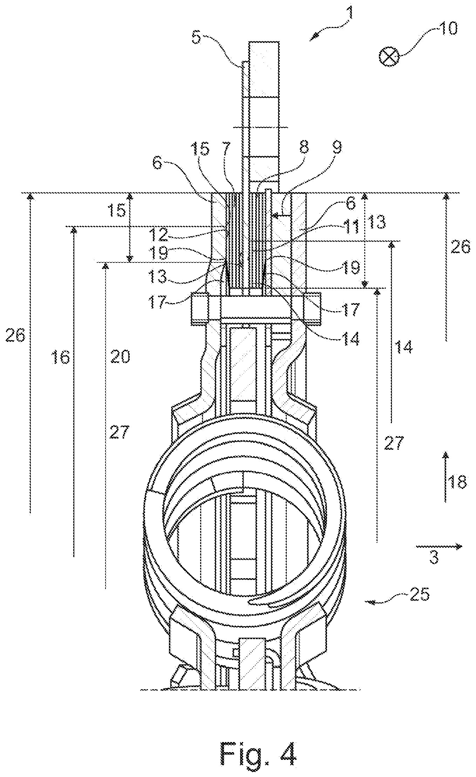

Fig. 4 zeigt ein Drehmomentbegrenzer 1 mit unterschiedlichen mittleren Reibradien 14, 16 in einer Seitenansicht im Schnitt. Auf die Ausführungen zu Fig. 1 und 3 wird verwiesen. Im Unterschied zu der dort dargestellten bekannten ersten Ausführungsvariante ist hier eine Aussparung 17 im Bereich der zweiten Kontaktfläche 15 vorgesehen.

Eine erste Kontaktfläche 13 zwischen jedem Reibbelag 7, 8 und der ersten Reibfläche 11 weist einen mittleren ersten Reibradius 14 und eine zweite Kontaktfläche 15 zwischen jedem Reibbelag 7, 8 und der zweiten Reibfläche 12 einen von dem mittleren ersten Reibradius 14 unterschiedlichen mittleren zweiten Reibradius 16 auf.

Der mittlere Reibradius 14, 16 liegt jeweils in der Mitte einer Kontaktfläche 13, 15 zwischen dem Reibbelag 7, 8 und der Reibfläche 11, 12 vor, wobei die Mitte entlang einer radialen Richtung 18 jeweils gleich weit von einem äußeren Radius 26 der Kontaktfläche 13, 15 und einem inneren Radius 27 der Kontaktfläche 13, 15 beabstandet angeordnet ist.

Der Unterschied der mittleren Reibradien 14, 16 ist durch die Aussparung 17 realisiert sein. Die Aussparung 17 ist an jedem Reibbelag 7, 8 hin zu der zweiten Reibfläche 12 und gleichzeitig an der zweiten Reibfläche 12 realisiert, wobei durch die Aussparung 17 die zweite Kontaktfläche 15 reduziert ist. Die Aussparung 17 ist in einer radialen Richtung 18 innen von dem mittleren ersten Reibradius 14 angeordnet. Die durch die Aussparung 17 reduzierte zweite Kontaktfläche 15 erstreckt sich mit einem an die Aussparung 17 angrenzenden Rand 19 entlang der Umfangsrichtung 10 auf einem konstanten ersten Radius 20.

Die Kontaktflächen 13, 15 erstrecken sich entlang der radialen Richtung 18 zwischen einem äußeren Radius 26 und einem inneren Radius 27. Der mittlere zweite Reibradius 16 wird durch die Aussparung 17 vergrößert, indem die Aussparung 17 in der radialen Richtung 18 innen von der zweiten Kontaktfläche 15 angeordnet ist und der innere Radius 27 (gegenüber dem inneren Radius 27 an der ersten Kontaktfläche 13 des jeweiligen Reibbelags 7, 8) vergrößert wird.

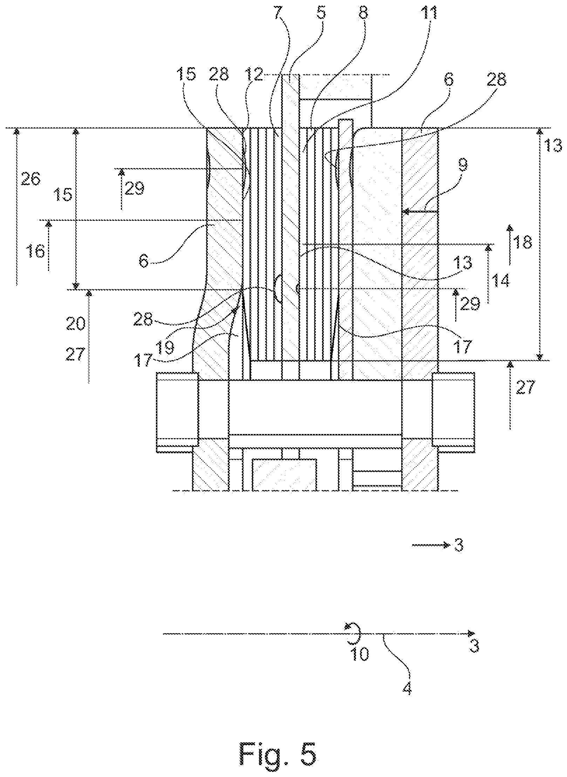

Fig. 5 zeigt ein Detail der Fig. 4. Auf die Ausführungen zu Fig. 4 wird verwiesen. Hier sind neben den Aussparungen 17 auch Erhöhungen 28 dargestellt.

Ein mittlerer Reibradius 14, 16 wird durch eine, innerhalb einer Kontaktfläche 13, 15 an einer Reibfläche 11, 12 angeordnete und sich zumindest in der axialen Richtung 3 hin zum Reibbelag 7, 8 erstreckende Erhöhung 28 erhöht oder verringert. Diese Erhöhung 28 ist entlang der Umfangsrichtung 10 umlaufend (und entlang eines konstanten zweiten Radius 29 verlaufend) ausgeführt. Durch die Erhöhung 28 wird eine Anpressung zwischen Reibbelag 7, 9 und Reibfläche 11, 12 verstärkt, wodurch der mittlere Reibradius 14, 16 verändert werden kann.

Die Erhöhung 28 wird hier durch eine Sicke an dem die Reibfläche 11, 12 bildendem Bauteil (Blech der Antriebsseite 5 bzw. der Abtriebsseite 6) realisiert.

## Patentansprüche

1. Drehmomentbegrenzer (1) für einen Antriebsstrang (2), zumindest aufweisend eine sich entlang einer axialen Richtung (3) erstreckende Drehachse (4) sowie eine Antriebsseite (5) und eine Abtriebsseite (6), die über mindestens einen Reibbelag (7, 8) und unter einer in der axialen Richtung (3) wirkenden Vorspannung (9) zumindest bis zum Erreichen eines in einer Umfangsrichtung (10) wirkenden Grenzdrehmoments miteinander drehmomentübertragend verbunden sind; wobei der mindestens eine Reibbelag (7, 8) bei Überschreiten des Grenzdrehmoments an einer, nur an einer von Antriebsseite (5) und Abtriebsseite (6) vorliegenden, ersten Reibfläche (11) rutschend angeordnet ist und dabei mit einer, an der anderen von Antriebsseite (5) und Abtriebsseite (6) vorliegenden zweiten Reibfläche (12) kraftschlüssig verbunden ist; wobei eine erste Kontaktfläche (13) zwischen dem mindestens einen Reibbelag (7, 8) und der ersten Reibfläche (11) einen mittleren ersten Reibradius (14) und eine zweite Kontaktfläche (15) zwischen dem mindestens einen Reibbelag (7, 8) und der zweiten Reibfläche (12) einen von dem mittleren ersten Reibradius (14) unterschiedlichen mittleren zweiten Reibradius (16) aufweist, **dadurch gekennzeichnet, dass** zumindest ein mittlerer Reibradius (14, 16) durch mindestens eine, innerhalb einer Kontaktfläche (13, 15) an einer Reibfläche (11, 12) angeordnete und sich zumindest in der axialen Richtung (3) hin zum Reibbelag (7, 8) erstreckende Erhöhung (28) erhöht oder verringert ist.

2. Drehmomentbegrenzer (1) nach Anspruch 1, wobei der mittlere erste Reibradius (14) kleiner ist als der mittlere zweite Reibradius (16).

3. Drehmomentbegrenzer (1) nach Anspruch 2, wobei der mittlere erste Reibradius (14) um mindestens 1 % kleiner ist als der mittlere zweite Reibradius (16).

4. Drehmomentbegrenzer (1) nach einem der vorhergehenden Ansprüche, wobei der Unterschied der mittleren Reibradien (14, 16) durch mindestens eine Aussparung (17) realisiert ist, wobei die mindestens eine Aussparung (17) zumindest an dem mindestens einem Reibbelag (7, 8) hin zu der Reibfläche (11, 12) oder an mindestens einer Reibfläche (11, 12) realisiert ist; wobei durch die Aussparung die Kontaktfläche (13, 15) reduziert ist.

5. Drehmomentbegrenzer (1) nach Anspruch 4, wobei die mindestens eine Aussparung (17) nur zumindest an dem mindestens einem Reibbelag (7, 8) hin zu der zweiten Reibfläche (12) oder an der zweiten Reibfläche (12) vorgesehen ist.

6. Drehmomentbegrenzer (1) nach Anspruch 5, wobei die mindestens eine Aussparung (17) in einer radialen Richtung (18) innen von dem mittleren ersten Reibradius (14) angeordnet ist.

7. Drehmomentbegrenzer (1) nach einem der vorhergehenden Ansprüche 4 bis 6, wobei die mindestens eine Aussparung (17) in der Umfangsrichtung (10) umlaufend ausgeführt ist.

8. Drehmomentbegrenzer (1) nach einem der vorhergehenden Ansprüche 4 bis 7, wobei sich die durch die Aussparung (17) reduzierte Kontaktfläche (13, 15) mit einem an die Aussparung (17) angrenzenden Rand (19) entlang der Umfangsrichtung (10) auf einem konstanten ersten Radius (20) erstreckt.

9. Antriebsstrang (2) für ein Kraftfahrzeug, zumindest aufweisend eine erste Antriebseinheit (21) zur Bereitstellung eines ersten Antriebsdrehmoments (22) und eine zweite Antriebseinheit (23) zur Bereitstellung eines zweiten Antriebsdrehmoments (24) und einen Drehmomentbegrenzer (1) nach einem der vorhergehenden Ansprüche, wobei die erste Antriebseinheit (21) und die zweite Antriebseinheit (23) über den Drehmomentbegrenzer (1) verbunden sind.

## Claims

1. A torque limiter (1) for a powertrain (2), at least having an axis of rotation (4) extending along an axial direction (3) and a drive side (5) and an output side (6) which are connected to each other in a torque-transmitting manner via at least one friction lining (7, 8) and under a pre-stress (9) acting in the axial direction (3) at least until a limit torque acting in a circumferential direction (10) is reached; wherein when the limit torque is exceeded the at least one friction lining (7, 8) is slidably arranged on a first friction surface (11) which is present only on one of the drive side (5) and the output side (6) and is thereby frictionally connected to a second friction surface (12) on the other of the drive side (5) and the output side (6); wherein a first contact surface (13) between the at least one friction lining (7, 8) and the first friction surface (11) has a mean first friction radius (14) and a second contact surface (15) between the at least one friction lining (7, 8) and the second friction surface (12) has a mean second friction radius (16) different from the mean first friction radius (14), **characterised in that** at least one mean friction radius (14, 16) is increased or decreased by at least one elevation (28) arranged on a friction surface (11, 12) within a contact surface (13, 15) and extending at least in the axial direction (3) towards the friction lining (7, 8).

2. The torque limiter (1) according to claim 1, wherein the mean first friction radius (14) is smaller than the mean second friction radius (16).

3. The torque limiter (1) according to claim 2, wherein the mean first friction radius (14) is at least 1% smaller than the mean second friction radius (16).

4. The torque limiter (1) according to one of the preceding claims, wherein the difference in the mean friction radii (14, 16) is realised by at least one recess (17), wherein the at least one recess (17) is realised at least on the at least one friction lining (7, 8) towards the friction surface (11, 12) or on the at least one friction surface (11, 12); wherein the contact surface (13, 15) is reduced by the recess.

5. The torque limiter (1) according to claim 4, wherein the at least one recess (17) is only provided at least on the at least one friction lining (7, 8) towards the second friction surface (12) or on the second friction surface (12).

6. The torque limiter (1) according to claim 5, wherein the at least one recess (17) is arranged in a radial direction (18) inside of the central first friction radius (14).

7. The torque limiter (1) according to one of the preceding claims 4 to 6, wherein the at least one recess (17) is designed to run circumferentially in the circumferential direction (10).

8. The torque limiter (1) according to one of the preceding claims 4 to 7, wherein the contact surface (13, 15) reduced by the recess (17) extends along the circumferential direction (10) on a constant first radius (20) with an edge (19) adjoining the recess (17).

9. A powertrain (2) for a motor vehicle, at least having a first drive unit (21) for providing a first drive torque (22) and a second drive unit (23) for providing a second drive torque (24) and a torque limiter (1) according to one of the preceding claims, wherein the first drive unit (21) and the second drive unit (23) are connected via the torque limiter (1).

## Revendications

1. Limiteur de couple (1) pour un groupe motopropulseur (2), présentant au moins un axe de rotation (4) s'étendant le long d'une direction axiale (3) et un côté entrée (5) et un côté sortie (6) qui sont reliés entre eux de manière à transmettre un couple, par l'intermédiaire d'au moins une garniture de friction (7, 8) et sous l'action d'une précontrainte (9) agissant dans la direction axiale (3), au moins jusqu'à ce qu'un couple limite agissant dans une direction circonférentielle (10) soit atteint ; dans lequel l'au moins une garniture de friction (7, 8) est agencée pour glisser sur une première surface de friction (11) présente uniquement sur le côté entrée (5) ou le côté sortie (6) lorsque le couple limite est dépassé, tout en faisant l'objet d'une liaison à force avec une seconde surface de friction (12) présente sur l'autre côté d'entrée (5) ou de sortie (6) ; dans lequel une première surface de contact (13) entre l'au moins une garniture de friction (7, 8) et la première surface de friction (11) présente un premier rayon de friction moyen (14) et une seconde surface de contact (15) entre l'au moins une la garniture de friction (7, 8) et la seconde surface de friction (12) présente un second rayon de friction moyen (16) différent du premier rayon de friction moyen (14), **caractérisé en ce qu'**au moins un rayon de friction moyen (14, 16) est augmenté ou diminué par le biais d'au moins une élévation (28) disposée à l'intérieur d'une surface de contact (13, 15) sur une surface de friction (11, 12) et s'étendant au moins dans la direction axiale (3) vers la garniture de friction (7, 8).

2. Limiteur de couple (1) selon la revendication 1, dans lequel le premier rayon de friction moyen (14) est inférieur au second rayon de friction moyen (16).

3. Limiteur de couple (1) selon la revendication 2, dans lequel le premier rayon de friction moyen (14) est au moins 1 % plus petit que le second rayon de friction moyen (16).

4. Limiteur de couple (1) selon l'une quelconque des revendications précédentes, dans lequel la différence des rayons de friction moyens (14, 16) est réalisée par le biais d'au moins un évidement (17), l'au moins un évidement (17) étant réalisé au moins sur l'au moins une garniture de friction (7, 8) vers la surface de friction (11, 12) ou sur au moins une surface de friction (11, 12) ; la zone de contact (13, 15) étant réduite par l'évidement.

5. Limiteur de couple (1) selon la revendication 4, dans lequel l'au moins un évidement (17) est uniquement prévu au moins sur l'au moins une garniture de friction (7, 8) vers la seconde surface de friction (12) ou sur la seconde surface de friction (12).

6. Limiteur de couple (1) selon la revendication 5, dans lequel l'au moins un évidement (17) est agencé dans une direction radiale (18) à l'intérieur du premier rayon de friction moyen (14).

7. Limiteur de couple (1) selon l'une quelconque des revendications 4 à 6 précédentes, dans lequel l'au moins un évidement (17) est conçu de manière circulaire dans la direction circonférentielle (10).

8. Limiteur de couple (1) selon l'une quelconque des revendications 4 à 7 précédentes, dans lequel la surface de contact (13, 15) réduite par l'évidement (17) s'étend avec un bord (19) contigu à l'évidement (17) le long de la direction circonférentielle (10) sur un premier rayon constant (20).

9. Groupe motopropulseur (2) pour un véhicule automobile, présentant au moins une première unité d'entraînement (21) pour fournir un premier couple d'entraînement (22) et une seconde unité d'entraînement (23) pour fournir un second couple d'entraînement (24) et un limiteur de couple (1) selon l'une quelconque des revendications précédentes, dans lequel la première unité d'entraînement (21) et la seconde unité d'entraînement (23) sont reliées par le biais du limiteur de couple (1).
